**Europäisches Patentamt**

**European Patent Office**

**Office européen des brevets**

(11) Veröffentlichungsnummer: **0 192 025**

**A1**

## (12) EUROPÄISCHE PATENTANMELDUNG

(21) Anmeldenummer: **86100176.6**

(22) Anmeldetag: **08.01.86**

(51) Int. Cl.⁴: **F 23 C 11/00**
**F 23 L 7/00**

(30) Priorität: **11.01.85 DE 3500810**

(43) Veröffentlichungstag der Anmeldung:
**27.08.86** Patentblatt **86/35**

(84) Benannte Vertragsstaaten:
**AT BE CH DE FR GB IT LI NL**

(71) Anmelder: **Linde Aktiengesellschaft**
**Abraham-Lincoln-Strasse 21**
**D-6200 Wiesbaden(DE)**

(72) Erfinder: **Rossmann, Manfred, Dr.-Ing.**
**Schaffhauser Strasse 6**
**D-8000 München 71(DE)**

(74) Vertreter: **Schaefer, Gerhard, Dr.**
**Linde Aktiengesellschaft Zentrale Patentabteilung**
**D-8023 Höllriegelskreuth(DE)**

(54) **Verfahren zum Verbrennen eines staubförmigen Brennstoffes.**

(57) Die Erfindung betrifft ein Verfahren zum Verbrennen eines staubförmigen Brennstoffes, bei dem ein mit dem Brennstoff beladener Gasstrom einem Brenner zugeführt und der Brennstoff verbrannt wird. Um staubförmige Brennstoffe auch bei Temperaturen unterhalb 970 K auf einfache Weise zünden zu können wird vorgeschlagen, in den mit Brennstoff beladenen Gasstrom Sauerstoff oder sauerstoffangereicherter Luft einzuleiten.

EP 0 192 025 A1

## Verfahren zum Verbrennen eines staubförmigen Brennstoffes

Die Erfindung betrifft ein Verfahren zum Verbrennen eines staubförmigen Brennstoffes, bei dem ein mit dem Brennstoff beladener Gasstrom einem Brenner zugeführt und der Brennstoff verbrannt wird.

Staubförmige Brennstoffe werden beispielsweise bei der Beheizung von Hochdruckdampfkesseln oder von Öfen zur Wärmebehandlung von grob- oder feinkeramischen Materialien u.a. mit verwendet.

Es sind Feststoffbrenner bekannt, bei denen die Verbrennungsluft und der Brennstoff am Brennermundstück gemischt werden und das Gemisch in den Brennraum eingeblasen wird. Außerdem gibt es Brenner, über die lediglich der Brennstoffstaub mittels eines Gasstromes in den Brennraum gefördert und dort mit der sauerstoffhaltigen Atmosphäre des Brennraums gemischt und verbrannt wird. Dabei kann der Brennstoffstaub über einen Glühkopf geleitet werden. Unter einem Glühkopf wird hierbei ein Brennerbauteil verstanden, das in den Brennraum hineinragt und der darin herrschenden Temperatur ausgesetzt ist. Im Glühkopf zündet der Brennstoff.

0192025

Anschließend wird der Brennstoff im Brennraum verteilt. Der Brennstoff verbrennt dabei im Brennraum. Damit ist der Einsatz derartiger Brenner auf Temperaturbereiche oberhalb ca. 970 K festgelegt, da unterhalb dieses Temperaturniveaus der Brennstoff nicht mehr vollständig zündet.

Der Erfindung liegt die Aufgabe zugrunde, ein Verfahren der eingangs genannten Art anzugeben, bei dem staubförmige Brennstoffe auch bei Temperaturen unterhalb 970 K auf einfache Weise gezündet werden können.

Diese Aufgabe wird erfindungsgemäß dadurch gelöst, daß in den mit Brennstoff beladenen Gasstrom Sauerstoff oder sauerstoffangereicherte Luft eingeleitet wird.

Dem erfindungsgemäßen Verfahren liegt die Erkenntnis zugrunde, daß viele brennbaren Stoffe in reiner Sauerstoffatmosphäre bzw. in einer mit Sauerstoff angereicherten Atmosphäre bei tieferen Temperaturen zünden und die Verbrennung bei höheren Temperaturen abläuft als in einer aus Luft bestehenden Atmosphäre. Es wurde nun gefunden, daß das Zünden staubförmiger Brennstoffe auf einfache und sichere Weise gelingt, wenn eine aus Sauerstoff oder sauerstoffangereicherter Luft bestehende Atmosphäre dadurch geschaffen wird, daß dem zum Transport des Brennstoffes dienenden Gasstrom Sauerstoff oder sauerstoffangereicherte Luft kurz vor dem Glühkopf zugemischt wird. Es wurde festgestellt, daß das Zünden von festen, staubförmigen Brennstoffen auch bei relativ tiefen Temperaturen unterhalb 970 K möglich ist. Zu Brennstoffen werden hierbei nicht nur Brennstoffe wie Sägespäne, Koksgrus oder Kohlenstaub, sondern alle brennbaren Stoffe bis hin zu Kaffeesatz gezählt. Aufgrund des erfindungsgemäßen Verfahrens ist der Einsatz von Feststoffbrennern der eingangs geschilderten Art auch in Temperaturzonen eines Brennraumes möglich, in denen bisher Feststoffbrenner nicht eingesetzt werden konnten.

Durch das erfindungsgemäße Verfahren wird aber nicht nur ein vollständiges Zünden des Brennstoffes bei relativ tiefen Temperaturen, sondern auch eine schnellere Verbrennung auf höherem Temperaturniveau bewirkt. Durch das vollständige Zünden und Verbrennen befinden sich weniger unverbrannte Bestandteile in der Asche. Daher fällt weniger Flugstaub an, so daß das erfindungsgemäße Verfahren auch zur Verringerung der Umweltbelastung beiträgt. Da der Anteil der unverbrannten Bestandteile im Flugstaub durch das erfindungsgemäße Verfahren erheblich reduziert wird, führt das erfindungsgemäße Verfahren zu einer Brennstoffeinsparung. Eine weitere Brennstoffeinsparung resultiert aus der intensiveren Verbrennung, die ein schnelleres Erreichen der für den Brennraum angestrebten Solltemperatur und damit eine frühere Brennerabschaltung ermöglicht.

In einer bevorzugten Ausgestaltung der Erfindung, in der ein Brenner mit Glühkopf Anwendung findet, wobei der Brennstoff im Glühkopf gezündet und in sauerstoffhaltiger Atmosphäre außerhalb des Brenners verbrannt wird, wird vorteilhafterweise der Sauerstoff bzw. die sauerstoffangereicherte Luft in den mit Brennstoff beladenen Gasstrom vor dem Kontakt des Brennstoffes mit dem Glühkopf eingeleitet.

Durch die erfindungsgemäße Erhöhung des Sauerstoffanteils im Glühkopf eines Feststoffbrenners wird staubförmiger Brennstoff auch bei relativ tiefen Temperaturen von 870 K und tiefer nahezu vollständig gezündet. Die erfindungsgemäße Verbrennung auf hohem Temperaturniveau bewirkt, daß der Glühkopf aufgeheizt wird und ebenfalls eine sehr hohe Temperatur annimmt.

In einer weiteren Ausgestaltung der Erfindung wird Sauer-

stoff oder sauerstoffangereicherte Luft nur in den Phasen, in denen dem Brenner Brennstoff zugeführt wird, in den Gasstrom eingeleitet. Demnach erübrigt sich eine kontinuierliche Versorgung des jeweiligen Feststoffbrenners mit Sauerstoff bzw. sauerstoffangereicherter Luft. Es hat sich als völlig ausreichend erwiesen, diese nur in den vorstehend angegebenen Phasen dem Gasstrom, der den Brennstoff transportiert, zuzumischen.

Grundsätzlich ist es beim erfindungsgemäßen Verfahren möglich, sauerstoffangereicherte Luft mit einem Sauerstoffanteil zu verwenden, der über dem Sauerstoffanteil der Luft liegt. In einer bevorzugten Ausgestaltung der Erfindung liegt jedoch der Sauerstoffgehalt der dem Gasstrom zuzumischenden sauerstoffangereicherten Luft - so nicht ohnehin reiner Sauerstoff oder zumindest technischer Sauerstoff verwendet wird - zwischen 35 Vol.% und 80 Vol.%.

Ausführungsbeispiel:

In einem Tunnelofen wurden Hintermauersteine gebrannt und zu diesem Zweck schubweise durch den Ofen bewegt. Jeder Wagen war mit ca. 4,5 t Hintermauersteinen beladen. Alle 20 Minuten wurde jeder Wagen um eine Wagenlänge weitergeschoben. Die Brenner hatten eine Totzeit von ca. 10 sec. Nach einer Totzeit wurden während ca. 2 sec. etwa 50 g Kohlenstaub mit einer Staubfeinheit unter 1 mm den Brennern zugeführt. Dazu diente ein Luftstrom von ca. 5 l. In diesen Luftstrom wurden während der 2 sec.-Phase 15 l Sauerstoff eingemischt, so daß sich im Brennerkopf eine Sauerstoffkonzentration von ca. 80 Vol.% Sauerstoff einstellte. In diesem Anwendungsbeispiel konnten ca. 10% Brennstoff gespart, der Flugstaubanteil ca. 3% reduziert und die Brennkurve optimiert werden.

Aufgrund der höheren Temperatur der Brennerflamme ist die Temperaturdifferenz zwischen dieser und dem zu brennenden Gut größer als bei herkömmlichen Verfahren. Um bei empfindlichem Rohstoff einen "Thermoschock" für das zu brennende Gut zu vermeiden bzw. abzuschwächen, kann die Impulssteuerung für die Brenner verändert oder eine zusätzliche Relaisschaltung für den Sauerstoffstrom angewendet werden. Auch die Konzentrationsverringerung des Sauerstoffanteiles in der sauerstoffangereicherten Verbrennungsluft mildert den Thermoschock.

Es wurde festgestellt, daß

- der Brennstoff auch bei niedriger Temperatur im Ofen vollständig zündete;

- weniger unverbrannte Bestandteile in der Asche waren;

- weniger Brennstoff eingesetzt werden mußte.

## Patentansprüche

1. Verfahren zum Verbrennen eines staubförmigen Brennstoffes, bei dem ein mit dem Brennstoff beladener Gasstrom einem Brenner zugeführt und der Brennstoff verbrannt wird, dadurch gekennzeichnet, daß in den mit Brennstoff beladenen Gasstrom Sauerstoff oder sauerstoffangereicherte Luft eingeleitet wird.

2. Verfahren nach Anspruch 1 mit einem Brenner mit Glühkopf, wobei der Brennstoff im Glühkopf gezündet und in sauerstoffhaltiger Atmosphäre außerhalb des Brenners verbrannt wird, dadurch gekennzeichnet, daß der Sauerstoff oder die sauerstoffangereicherte Luft in den mit Brennstoff beladenen Gasstrom vor dem Kontakt des Brennstoffs mit dem Glühkopf eingeleitet wird.

3. Verfahren nach einem der Ansprüche 1 oder 2, dadurch gekennzeichnet, daß Sauerstoff oder sauerstoffangereicherte Luft in den Phasen eingeleitet wird, in denen dem Brenner Brennstoff zugeführt wird.

0192025

4. Verfahren nach einem der Ansprüche 1 bis 3, dadurch gekennzeichnet, daß der Sauerstoffgehalt der sauerstoff-angereicherten Luft zwischen 35 Vol.% und 80 Vol.% liegt.

## Europäisches Patentamt

# EUROPÄISCHER RECHERCHENBERICHT

EP 86100176.6

## EINSCHLÄGIGE DOKUMENTE

| Kategorie | Kennzeichnung des Dokuments mit Angabe. soweit erforderlich. der maßgeblichen Teile | Betrifft Anspruch | KLASSIFIKATION DER ANMELDUNG (Int Cl 4) |
|---|---|---|---|
| X | <u>DE - C - 915 486</u> (WALTHER & CIE)<br>* Gesamt *<br><br>-- | 1-3 | F 23 C 11/00<br>F 23 L 7/00 |
| X | <u>AT - B1 - E 5020</u> (SHELL)<br>* Gesamt *<br><br>-- | 1,3 | |
| A | <u>GB - A - 669 050</u> (KOPPERS)<br>* Gesamt *<br><br>-- | 1 | |
| A | <u>GB - A - 310 881</u> (ANDRIEUX)<br>* Seite 1, Zeilen 13-17 *<br><br>---- | 1 | |

|  |
|---|
| RECHERCHIERTE SACHGEBIETE (Int. Cl.4) |
| F 23 C 7/00 |
| F 23 C 11/00 |
| F 23 D 1/00 |
| F 23 K 1/00 |
| F 23 K 3/00 |
| F 23 L 7/00 |

Der vorliegende Recherchenbericht wurde für alle Patentansprüche erstellt

| Recherchenort | Abschlußdatum der Recherche | Prüfer |
|---|---|---|
| WIEN | 30-05-1986 | TSCHÖLLITSCH |